# EUROPEAN PATENT APPLICATION

(11) **EP 4 510 504 A1**
(43) Date of publication of application: **19.02.2025**
(21) Application number: 23830300.2
(22) Date of filing: 28.06.2023
(51) Int. Cl.: H04L 9/40

(54) **REMOTE ATTESTATION METHOD, APPARATUS, SYSTEM, STORAGE MEDIUM AND COMPUTER PROGRAM PRODUCT**

(30) Priority: 30.06.2022 CN 202210769320
(71) Applicant: Huawei Technologies Co., Ltd., Shenzhen, Guangdong 518129 (CN)
(72) Inventor: LUO, Wu, Shenzhen, Guangdong 518129 (CN); ZHANG, Linhao, Shenzhen, Guangdong 518129 (CN); SUN, Kang, Shenzhen, Guangdong 518129 (CN); ZHANG, Guangyu, Shenzhen, Guangdong 518129 (CN)
(74) Representative: Isarpatent
(86) International application number: PCT/CN2023/103038
(87) International publication number: WO 2024/002124

(57) **Abstract**

This application relates to the field of information security technologies, and discloses a remote attestation method, apparatus, and system, a storage medium, and a computer program product. In a remote attestation procedure, an attestation report provided by a prover for a verifier includes first measurement information of a target TA, where the first measurement information is obtained by the prover measuring, in a procedure of running the target TA, data of the target TA during running. In other words, the first measurement information can indicate a status of the target TA during running. If the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of remote attestation.

## Description

This application claims priority to Chinese Patent Application No. 202210769320.8, filed on June 30, 2022 and entitled "REMOTE ATTESTATION METHOD, APPARATUS, AND SYSTEM, STORAGE MEDIUM, AND COMPUTER PROGRAM PRODUCT", which is incorporated herein by reference in its entirety.

### TECHNICAL FIELD

This application relates to the field of information security technologies, and in particular, to a remote attestation method, apparatus, and system, a storage medium, and a computer program product.

### BACKGROUND

With the continuous development of information technology, information security has become a focus. To improve information security, confidential computing (confidential computing, CC) emerges. Remote attestation (remote attestation, RA) is an important part of the confidential computing. Remote attestation occurs between a verifier and a prover. The prover is configured to run one or more trusted applications (trusted application, TA) of the verifier in a trusted execution environment (trusted execution environment, TEE). In a remote attestation procedure, the verifier may request the prover to attest whether any TA of the verifier is securely run in the TEE of the prover. How to ensure reliability of the remote attestation is the focus of current research.

### SUMMARY

This application provides a remote attestation method, apparatus, and system, a storage medium, and a computer program product, to reduce false attestations and improve reliability of remote attestation. Technical solutions are as follows.

According to a first aspect, a remote attestation method is provided. The method includes:
A prover receives a remote attestation request from a verifier, where the remote attestation request is used to request to attest whether a target TA is securely run in a TEE of the prover, and the target TA is any TA of the verifier. The prover obtains measurement information of the target TA, where the measurement information of the target TA includes first measurement information, and the first measurement information is obtained by the prover measuring, in a procedure of running the target TA, data of the target TA during running. The prover sends a first attestation report to the verifier, where the first attestation report includes the measurement information of the target TA, and the first attestation report is used by the verifier to determine whether the target TA is securely run in the TEE.

Because the first measurement information can indicate a status of the target TA during running, if the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of remote attestation.

Optionally, the measurement information of the target TA further includes second measurement information. The second measurement information indicates a status of the target TA during startup, and the second measurement information is obtained by the prover from secure storage space through reading. In other words, the prover can alternatively attest, based on the second measurement information, that the target TA is secure during startup, to ensure security of the target TA during startup.

Optionally, the prover is further configured to: run a secondary client application (client application, CA) in a rich execution environment (rich execution environment, REE), and run a trusted module in the TEE. That a prover receives a remote attestation request from a verifier includes: The secondary CA receives the remote attestation request. That the prover obtains measurement information of the target TA based on the remote attestation request includes: The secondary CA sends the remote attestation request to the trusted module, and the trusted module obtains the measurement information of the target TA based on the remote attestation request. It should be understood that the measurement information of the target TA is obtained by using the secondary CA and the trusted module, and the target TA does not need to participate in remote attestation. In this way, the target TA remains unaware, to prevent a malicious attack from hiding when the target TA is aware. Reliability of the remote attestation is improved.

Optionally, the first attestation report further includes first signature information and a certificate of an attestation key (attestation key, AK). The first signature information is signature information obtained by the prover signing the measurement information of the target TA by using the AK, and the certificate of the AK is used by the verifier to verify the first signature information. In other words, the first signature information is used to improve trustworthiness of the measurement information that is of the target TA and that is provided by the prover for the verifier.

Optionally, the method further includes: The prover generates a public-private key pair based on a key generation request. The prover uses a private key in the public-private key pair as the AK. The prover signs a public key in the public-private key pair by using a device root key (device root key, DRK) of the prover, to obtain the certificate of the AK. It should be understood that in a manner 1 of generating the AK and the certificate of the AK, the prover independently generates the AK and the certificate of the AK without participation of another device, for example, without participation of an attestation server (attestation server, AS).

Optionally, the key generation request carries first indication information, and the first indication information indicates that the AS does not need to participate in a key generation procedure. In other words, this solution may specify whether the AS needs to participate in a procedure of generating the AK and the certificate of the AK.

Optionally, the method further includes: The prover generates a public-private key pair based on a key generation request. The prover uses a private key in the public-private key pair as the AK, and uses a public key in the public-private key pair as a public key corresponding to the AK. The prover signs a trusted computing base (trusted computing base, TCB) of the prover and the public key corresponding to the AK by using a DRK of the prover, to obtain second signature information. The prover sends the TCB and the second signature information to an AS, to indicate the AS to verify the second signature information and the TCB, and when the verification succeeds, signs the public key corresponding to the AK by using a private key of the AS, to obtain the certificate of the AK. The prover receives the certificate of the AK from the AS. It should be understood that in a manner 2 of generating the AK and the certificate of the AK, the prover and the AS jointly participate in generating the AK and the certificate of the AK, and a non-anonymous key generation protocol is used in a key generation procedure.

Optionally, the key generation request carries second indication information, and the second indication information indicates that the AS needs to participate in the key generation procedure.

Optionally, the second indication information further indicates that the non-anonymous key generation protocol is used in the key generation procedure.

Optionally, to further improve reliability of the remote attestation, the first attestation report further includes the TCB of the prover and third signature information, and the third signature information is signature information obtained by the prover signing the TCB by using the AK In this way, the verifier may further verify the TCB of the prover, to improve trustworthiness of the measurement information that is of the target TA and that is provided by the prover.

Optionally, the first attestation report further includes a verification result that verification by the AS on the third signature information and the TCB of the prover succeeds, and includes fourth signature information. The third signature information is signature information obtained by the prover signing the TCB by using the AK, the fourth signature information is signature information obtained by the AS signing the verification result by using the private key of the AS, and the verification result includes the TCB.

Optionally, a TrustZone architecture is used in the prover. It should be understood that this application provides a remote attestation solution in the TrustZone architecture.

According to a second aspect, a remote attestation method is provided. The method includes:
A verifier sends a remote attestation request to a prover, where the remote attestation request is used to request to attest whether a target TA is securely run in a TEE of the prover, and the target TA is any TA of the verifier. The verifier receives a first attestation report from the prover, where the first attestation report includes measurement information of the target TA, the measurement information of the target TA includes first measurement information, and the first measurement information is obtained by the prover measuring, in a procedure of running the target TA, data of the target TA during running. The verifier verifies the first attestation report, to determine whether the target TA is securely run in the TEE.

Because the first measurement information can indicate a status of the target TA during running, if the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of remote attestation.

Optionally, the measurement information of the target TA further includes second measurement information. The second measurement information indicates a status of the target TA during startup, and the second measurement information is obtained by the prover from secure storage space through reading. In other words, the prover can alternatively attest, based on the second measurement information, that the target TA is secure during startup, to ensure security of the target TA during startup.

Optionally, the first attestation report further includes a TCB of the prover and third signature information, and the third signature information is signature information obtained by the prover signing the TCB by using an AK. In this way, the verifier may further verify the TCB of the prover, to improve trustworthiness of the measurement information that is of the target TA and that is provided by the prover. Reliability of the remote attestation is improved.

Optionally, the first attestation report further includes a verification result that verification by an AS on a TCB of the prover and third signature information succeeds, and includes fourth signature information. The third signature information is signature information obtained by the prover signing the TCB by using an AK, the fourth signature information is signature information obtained by the AS signing the verification result by using a private key of the AS, and the verification result includes the TCB.

According to a third aspect, a remote attestation apparatus is provided. The remote attestation apparatus has a function of implementing behavior in the remote attestation method according to the first aspect. The remote attestation apparatus includes one or more modules, and the one or more modules are configured to implement the remote attestation method according to the first aspect.

In other words, a remote attestation apparatus is provided. The apparatus is used in a prover. The apparatus includes:
a first receiving module, configured to receive a remote attestation request from a verifier, where the remote attestation request is used to request to attest whether a target TA is securely run in a TEE of the prover, and the target TA is any TA of the verifier;
an obtaining module, configured to obtain measurement information of the target TA, where the measurement information of the target TA includes first measurement information, and the first measurement information is obtained by the obtaining module measuring, in a procedure in which the prover runs the target TA, data of the target TA during running; and
a first sending module, configured to send a first attestation report to the verifier, where the first attestation report includes the measurement information of the target TA, and the first attestation report is used by the verifier to determine whether the target TA is securely run in the TEE.

Optionally, the measurement information of the target TA further includes second measurement information. The second measurement information indicates a status of the target TA during startup, and the second measurement information is obtained by the obtaining module from secure storage space through reading.

Optionally, the prover is further configured to run a secondary CA in an REE, and run a trusted module in the TEE.

The first receiving module is configured to receive the remote attestation request by using the secondary CA.

The obtaining module is configured to: send the remote attestation request to the trusted module by using the secondary CA, and obtain, based on the remote attestation request, the measurement information of the target TA by using the trusted module.

Optionally, the first attestation report further includes first signature information and a certificate of an AK, the first signature information is signature information obtained by the obtaining module signing the measurement information of the target TA by using the AK, and the certificate of the AK is used by the verifier to verify the first signature information.

Optionally, the apparatus further includes:
a first generation module, configured to: generate a public-private key pair based on a key generation request, and use a private key in the public-private key pair as the AK; and
a first signing module, configured to sign a public key in the public-private key pair by using a DRK of the prover, to obtain the certificate of the AK.

Optionally, the key generation request carries first indication information, and the first indication information indicates that an AS does not need to participate in a key generation procedure.

Optionally, the apparatus further includes:
a second generation module, configured to: generate a public-private key pair based on a key generation request, use a private key in the public-private key pair as the AK, and use a public key in the public-private key pair as a public key corresponding to the AK;
a second signing module, configured to sign a TCB of the prover and the public key corresponding to the AK by using a DRK of the prover, to obtain second signature information;
a second sending module, configured to: send the TCB and the second signature information to an AS, to indicate the AS to verify the second signature information and the TCB, and when the verification succeeds, sign the public key corresponding to the AK by using a private key of the AS, to obtain the certificate of the AK; and
a second receiving module, configured to receive the certificate of the AK from the AS.

Optionally, the key generation request carries second indication information, and the second indication information indicates that the AS needs to participate in the key generation procedure.

Optionally, the second indication information further indicates that a non-anonymous key generation protocol is used in the key generation procedure.

Optionally, the first attestation report further includes the TCB of the prover and third signature information, and the third signature information is signature information obtained by the obtaining module signing the TCB by using an AK.

Optionally, the first attestation report further includes a verification result that verification by the AS on the third signature information and the TCB of the prover succeeds, and includes fourth signature information.

The third signature information is signature information obtained by the obtaining module signing the TCB by using the AK, the fourth signature information is signature information obtained by the AS signing the verification result by using the private key of the AS, and the verification result includes the TCB.

Optionally, a TrustZone architecture is used in the prover.

According to a fourth aspect, a remote attestation apparatus is provided. The remote attestation apparatus has a function of implementing behavior in the remote attestation method according to the second aspect. The remote attestation apparatus includes one or more modules, and the one or more modules are configured to implement the remote attestation method according to the second aspect.

In other words, a remote attestation apparatus is provided. The apparatus is used in a verifier. The apparatus includes:
a sending module, configured to send a remote attestation request to a prover, where the remote attestation request is used to request to attest whether a target TA is securely run in a TEE of the prover, and the target TA is any TA of the verifier;
a receiving module, configured to receive a first attestation report from the prover, where the first attestation report includes measurement information of the target TA, the measurement information of the target TA includes first measurement information, and the first measurement information is obtained by the prover measuring, in a procedure of running the target TA, data of the target TA during running; and
a verification module, configured to verify the first attestation report, to determine whether the target TA is securely run in the TEE.

Optionally, the measurement information of the target TA further includes second measurement information. The second measurement information indicates a status of the target TA during startup, and the second measurement information is obtained by the prover from secure storage space through reading.

Optionally, the first attestation report further includes a TCB of the prover and third signature information, and the third signature information is signature information obtained by the prover signing the TCB by using an AK.

Optionally, the first attestation report further includes a verification result that verification by an AS on a TCB of the prover and third signature information succeeds, and includes fourth signature information. The third signature information is signature information obtained by the prover signing the TCB by using an AK, the fourth signature information is signature information obtained by the AS signing the verification result by using a private key of the AS, and the verification result includes the TCB.

According to a fifth aspect, a remote attestation system is provided. The system includes a verifier and a prover. The prover is configured to implement steps of the remote attestation method according to the first aspect, and the verifier is configured to implement steps of the remote attestation method according to the second aspect.

According to a sixth aspect, a computer device is provided. The computer device includes a processor and a memory. The memory is configured to: store a program for performing the remote attestation method according to the first aspect, and store data related to implementation of the remote attestation method according to the first aspect. Alternatively, the memory is configured to: store a program for performing the remote attestation method according to the second aspect, and store data related to implementation of the remote attestation method according to the second aspect. The processor is configured to execute the program stored in the memory. The computer device may further include a communication bus, and the communication bus is configured to establish a connection between the processor and the memory.

According to a seventh aspect, a computer-readable storage medium is provided. The computer-readable storage medium stores instructions, and when the instructions are run on a computer, the computer is enabled to perform the remote attestation method according to the first aspect or the second aspect.

According to an eighth aspect, a computer program product including instructions is provided. When the instructions are run on a computer, the computer is enabled to perform the remote attestation method according to the first aspect or the second aspect.

Technical effects obtained in the third aspect to the eighth aspect are similar to the technical effects obtained by using corresponding technical means in the first aspect or the second aspect. Details are not described herein again.

In conclusion, the technical solutions provided in this application can bring at least the following beneficial effects:

In a remote attestation procedure, an attestation report provided by a prover for a verifier includes first measurement information of a target TA, where the first measurement information is obtained by the prover measuring, data of the target TA in a memory during running. In other words, the first measurement information can indicate a status of the target TA during running. If the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of the remote attestation.

### BRIEF DESCRIPTION OF DRAWINGS

FIG. 1 is a diagram of a TrustZone architecture related to a remote attestation method according to an embodiment of this application;
FIG. 2 is a diagram of an architecture of a system related to a remote attestation method according to an embodiment of this application;
FIG. 3 is a diagram of a structure of a computer device according to an embodiment of this application;
FIG. 4 is a flowchart of a remote attestation method according to an embodiment of this application;
FIG. 5 is a diagram of an architecture of another system related to a remote attestation method according to an embodiment of this application;
FIG. 6 is a diagram of an architecture of another system related to a remote attestation method according to an embodiment of this application;
FIG. 7 is a diagram of an architecture of another system related to a remote attestation method according to an embodiment of this application;
FIG. 8 is a diagram of a structure of a remote attestation apparatus according to an embodiment of this application; and
FIG. 9 is a diagram of a structure of another remote attestation apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, before a remote attestation method provided in embodiments of this application is explained and described in detail, the implementation background of embodiments of this application is first described.

With continuous improvement of performance of an advanced reduced instruction set machine (advanced RISC machine, ARM) processor, a computer device on which an ARM processor is run brings great convenience to life. In addition, the computer device also carries increasingly more user data, and a user pays more attention to security of the computer device.

The TrustZone technology is currently a mainstream technology for solutions of computer device security. The TrustZone technology can divide hardware resources of the computer device into an REE side and a TEE side. Physical memories of the computer device are divided into a non-secure memory and a secure memory. Code and data on the REE side are stored in the non-secure memory, and code and data on the TEE side are stored in the secure memory. Therefore, security on the REE side is lower than that on the TEE side. The REE side may be understood as a normal world (normal world), and the TEE side may be understood as a secure world (secure world). A user operating system works on the REE side. The TrustZone has a hardware security feature to allow a secure program to work on the TEE side. A processor can work on the REE side or the TEE side, and the processor can switch back and forth between the REE side and the TEE side.

When working on the REE side, the processor is forbidden from accessing hardware resources (such as registers, memories, caches, and peripherals) on the TEE side. Once the processor attempts to access the hardware resources, the system directly crashes. For example, the TrustZone technology can configure a TrustZone address space controller (TrustZone address space controller, TZASC) register and a TrustZone memory adapter (TrustZone memory adapter, TZMA) register, to set a sensitive memory as a secure memory. The processor working on the REE side cannot access the secure memory, but can access the non-secure memory. When the processor works on the TEE side, the processor can access both hardware resources on the TEE side and hardware resources on the REE side. For example, the processor working on the TEE side can access both the secure memory and the non-secure memory.

Because the TrustZone has a higher permission than the operating system on the REE side, the TrustZone can serve as a trusted root to provide security protection for the operating system on the REE side. The non-secure memory does not mean that data stored in the non-secure memory is malicious, but that security of an environment in which the non-secure memory is located is lower than that of the secure memory. In other words, the security of the non-secure memory is lower than that of the secure memory.

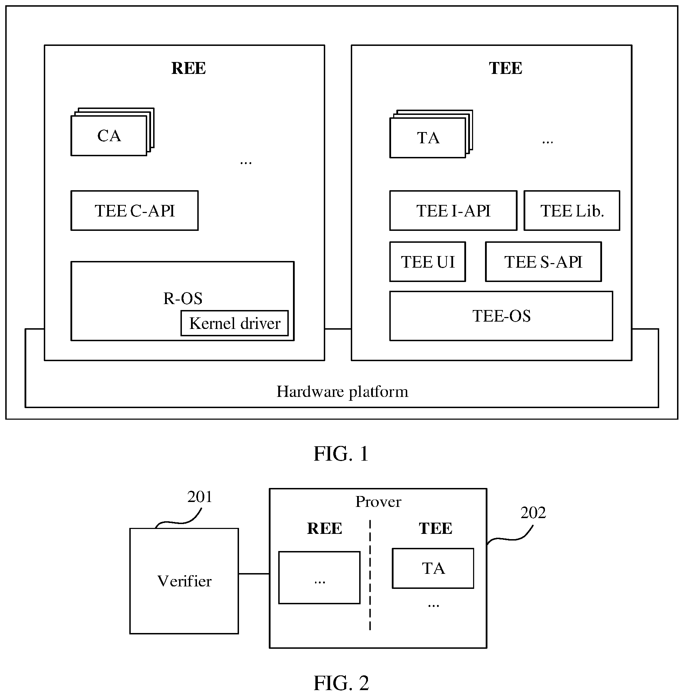

FIG. 1 describes a TrustZone architecture. An REE architecture is on the left, and a TEE architecture is on the right. A user operating system and some CAs are run in the REE. The user operating system is a rich operating system (rich operating system, R-OS). The R-OS has a kernel driver, configured to complete communication between the REE side and the TEE side. A TEE operating system and some TAs are run in the TEE. The TEE operating system is a TEE-OS, which is also referred to as a secure operating system (secure operating system, S-OS). A TEE client application programming interface (client application programming interface, C-API) is a bridge for communication between the REE and the TEE. The CA run in the REE can communicate, through the TEE C-API, with a security service run in the TEE, for example, invoking the TA on the TEE side to implement some functions, for example, to obtain a security capability. The CA is generally run in user mode on the REE side. The TEE side further includes a TEE internal application programming interface (internal API, I-API). The TA can invoke the TEE I-API to use functions provided by the TEE side, such as secure storage, password calculation, security audit, and trusted display. It should be noted that the REE side and the TEE side may further have some other interfaces, modules, and the like. For example, the TEE side further has some data link libraries (like TEE Lib.), a TEE user interface (TEE user interface, TEE UI), and a TEE socket (socket) API (namely, the TEE S-API), and may further have some trusted firmware, hardware platforms, and the like. The content is seldom described in embodiments of this application, and is not described herein again.

In a related technology of remote attestation, in a procedure in which a prover starts a TA (referred to as a target TA) of a verifier, the prover first loads the target TA to a memory, and calculates a measurement value of data in the memory, to obtain measurement information of the target TA, and then stores the measurement information of the target TA in secure storage space. Then, the prover starts to run the target TA. In a remote attestation procedure, the verifier may initiate a remote attestation request to the prover, to request to attest whether the target TA is securely run in a TEE of the prover. After receiving the remote attestation request, the prover reads the measurement information of the target TA from the secure storage space, and returns an attestation report to the verifier, where the attestation report carries the measurement information. The verifier evaluates trustworthiness of the received first attestation report, to determine whether the target TA is securely run in the TEE of the prover.

However, in the remote attestation procedure, the measurement information reflects a status of the target TA during startup, and the status of the target TA during startup does not necessarily represent a status of the target TA during running. In other words, that the target TA is secure during startup does not mean that the target TA is also secure during running. If the target TA is maliciously attacked in a running procedure, it may be attested in the remote attestation procedure that the target TA is securely run in the TEE, causing existence of a false attestation. However, a remote attestation method provided in embodiments of this application can attest that the target TA is also secure during running, to ensure reliability of the remote attestation.

In addition, in some specific implementations of technologies related to remote attestation, a user CA at the prover receives the remote attestation request from the verifier, and the user CA transfers the remote attestation request to the target TA. The prover further includes a secure quoting enclave (quoting enclave, QE). The target TA initiates local attestation to the QE. The QE reads, from the secure storage space, the measurement information of the target TA, and signature information obtained by a processor (for example, a general-purpose central processing unit (central processing unit, CPU)) signing the measurement information of the target TA. After verification on the signature information succeeds, the QE signs the measurement information of the target TA by using an attestation key (AK), to obtain target signature information. The QE returns the attestation report (including the measurement information of the target TA and the target signature information) to the user CA by using the target TA, and then the user CA returns the attestation report to the verifier. The verifier sends the attestation report to an AS. The AS has a public key of the AK or a certificate (the certificate includes the public key) of the AK. The AS verifies the target signature information by using the public key of the AK, to verify whether the measurement information of the target TA is from a valid CPU. When the verification succeeds, the AS signs the attestation report by using a private key of the AS, and returns the signed attestation report to the verifier. The verifier has a public key of the AS or a certificate of the AS, and can verify the attestation report signed by the AS, to evaluate trustworthiness of the attestation report.

It can be learned that the AS needs to participate in the attestation procedure, and the remote attestation procedure is relatively complex. If the AS is a service device provided by a third party, there may be a "stranglehold" problem. However, the remote attestation method provided in embodiments of this application may include participation of the AS, to improve reliability, or may not include participation of the AS, to reduce complexity and avoid the "stranglehold" problem.

In addition, the target TA needs to participate in the remote attestation procedure, that is, the target TA is aware. However, the remote attestation method provided in embodiments of this application may not need participation of the target TA, so that the target TA is unaware, to prevent a malicious attack from hiding when the target TA is aware. In other words, if the target TA participates in the remote attestation procedure and the target TA has been intruded by a malicious program, in the remote attestation procedure, the malicious program may hide first, and after the QE or the target TA obtains good measurement information (that is, including no information related to the malicious program), the malicious program is then restored to an attack state. In this way, in the remote attestation procedure, it may be verified that the target TA is securely run in the TEE. In other words, a false attestation exists. However, when the target TA is unaware, the malicious attack cannot hide, and a TOCTTOU (time of check to time of use) attack can be prevented, to reduce false attestations.

The remote attestation method provided in embodiments of this application can be applied to both a server scenario and an intelligent terminal scenario. In the server scenario, a TrustZone architecture is used in a server, and the server may be referred to as an ARM server. The server is configured to run some TAs in a TEE, for example, TAs of a user who rents the server. A TA of the user may be a cloud computing service, a model training service, or the like. In a remote attestation procedure, the server, as a prover, may provide, for a verifier based on a remote attestation request of the verifier, an attestation report that can attest whether the TA of the user is securely run in the TEE. For example, a cloud computing program of the user is expected to be securely run in a TEE of a cloud server, and a user terminal may serve as a challenger (namely, the verifier) to request the cloud server to attest that the cloud computing program is securely run in the TEE.

In the intelligent terminal scenario, an intelligent terminal may be an Internet of things device, a smartphone, or the like. The Internet of things device is, for example, a surveillance camera or another Internet of things sensor. A TrustZone architecture is used in the intelligent terminal, another device (for example, a server or a client) may serve as a verifier, and the intelligent terminal serves as a prover. For example, the surveillance camera may need to perform some processing on a captured video. As the prover, the surveillance camera may provide, based on a remote attestation request of the verifier, an attestation report for the verifier, to attest that video processing and storage in the surveillance camera are secure. For another example, a payment program installed in the smartphone is expected to be run in a secure world (namely, the TEE) of the smartphone, and a payment server may serve as a verifier to request the smartphone to attest whether the payment program is run in the secure world.

It should be noted that embodiments of this application can be applied to both an ARM TrustZone architecture and another architecture, for example, a software guard extension (software guard extension, SGX) architecture, a secure encrypted virtualization (secure encrypted virtualization, SEV) architecture, and the like. This is not limited in embodiments of this application. A secure enclave (enclave) is established in the SGX architecture, a program running in the enclave has a secure memory, and the enclave is equivalent to a TEE in the ARM TrustZone architecture. In subsequent embodiments, a remote attestation method in a TrustZone architecture serves as an example for description. A principle of a remote attestation method in another architecture is consistent with that of the remote attestation method in the TrustZone architecture.

FIG. 2 is a diagram of an architecture of a system related to a remote attestation method according to an embodiment of this application. Refer to FIG. 2. The system includes a verifier 201 and a prover 202. The prover 202 is configured to run one or more TAs of the verifier 201 in a TEE.

In embodiments of this application, the verifier 201 is configured to send a remote attestation request to the prover 202, to request to attest that a target TA is securely run in the TEE. The prover 202 is configured to: obtain measurement information of the target TA, and send a first attestation report to the verifier 201. The verifier 201 is further configured to verify the first attestation report, to determine whether the target TA is securely run in the TEE. The target TA is any TA of the verifier. The first attestation report includes measurement information of the target TA, the measurement information of the target TA includes first measurement information, and the first measurement information is obtained by the prover 202 measuring data of the target TA in a memory during running.

It can be learned from the foregoing descriptions that the remote attestation procedure in embodiments of this application may or may not include participation of an AS, and may or may not include participation of the target TA. In view of this, each device in the system may be subdivided into modules, to implement this solution through cooperation of the modules. The system may further include an AS, to implement this solution through cooperation of between the system and the AS. This will be described in detail below.

It should be noted that the system architectures and the service scenarios described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

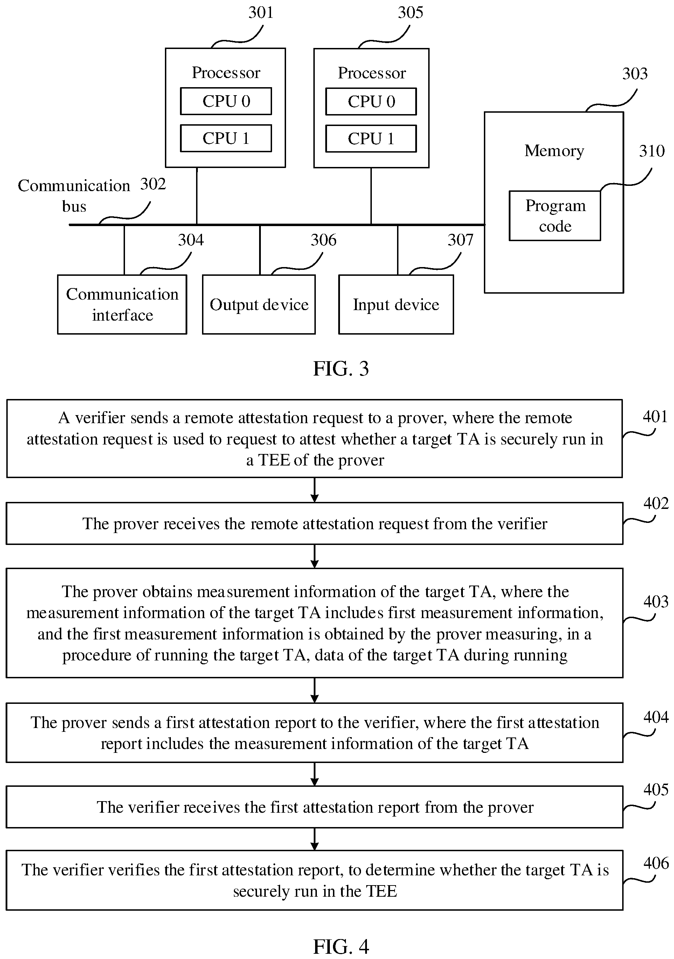

Refer to FIG. 3. FIG. 3 is a diagram of a structure of a computer device according to an embodiment of this application. Optionally, the computer device is a server or an intelligent terminal. The computer device includes one or more processors 301, a communication bus 302, a memory 303, and one or more communication interfaces 304.

The processor 301 is a general-purpose central processing unit (central processing unit, CPU), a network processor (network processing, NP), a microprocessor, or one or more integrated circuits configured to implement the solutions in this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable gate array (field-programmable gate array, FPGA), generic array logic (generic array logic, GAL), or any combination thereof.

The communication bus 302 is configured to transmit information between the components. Optionally, the communication bus 302 is classified into an address bus, a data bus, a control bus, and the like. For ease of representation, only one thick line is used to represent the bus in the figure, but this does not mean that there is only one bus or only one type of bus.

Optionally, the memory 303 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, the memory 303 is not limited thereto. The memory 303 exists independently, and is connected to the processor 301 through the communication bus 302. Alternatively, the memory 303 is integrated with the processor 301.

The communication interface 304 is configured to communicate with another device or a communication network by using any transceiver-type apparatus. The communication interface 304 includes a wired communication interface, or optionally includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like.

Optionally, in some embodiments, the computer device includes a plurality of processors, for example, the processor 301 and a processor 305 shown in FIG. 3. Each of the processors is a single-core processor or a multicore processor. Optionally, the processor herein is one or more devices, circuits, and/or processing cores for processing data (for example, computer program instructions).

During specific implementation, in an embodiment, the computer device further includes an output device 306 and an input device 307. The output device 306 communicates with the processor 301, and can display information in a plurality of manners. For example, the output device 306 is a liquid crystal display (liquid crystal display, LCD), a light emitting diode (light emitting diode, LED) display device, a cathode ray tube (cathode ray tube, CRT) display device, or a projector (projector). The input device 307 communicates with the processor 301, and can receive user input in a plurality of manners. For example, the input device 307 is a mouse, a keyboard, a touchscreen device, or a sensing device.

In some embodiments, the memory 303 is configured to store program code 310 for executing the solutions in this application, and the processor 301 can execute the program code 310 stored in the memory 303. The program code includes one or more software modules, and the computer device can implement, by using the processor 301 and the program code 310 in the memory 303, a remote attestation method provided in the following embodiment in FIG. 4.

FIG. 4 is a flowchart of a remote attestation method according to an embodiment of this application. The method is used for a verifier and a prover. For example, a TrustZone architecture is used in the prover, and one or more TAs of the verifier are expected to be run in a TEE of the prover. Refer to FIG. 4. The method includes the following steps.

**Step 401:** The verifier sends a remote attestation request to the prover, where the remote attestation request is used to request to attest whether a target TA is securely run in a TEE of the prover.

The target TA is any TA of the verifier. Optionally, when one TA of the verifier is expected to be run on the prover, the remote attestation request includes an identifier of the verifier and/or an identifier of the target TA. When a plurality of TAs of the verifier are expected to be run on the prover, the remote attestation request includes an identifier of the verifier and an identifier of the target TA. In embodiments of this application, the identifier of the verifier may be an Internet protocol (Internet protocol, IP) address of the verifier, or may be another identifier. The identifier of the target TA is a universally unique identifier (universally unique identifier, UUID) of the target TA.

It should be noted that in embodiments of this application, the verifier requests to verify one target TA each time. Correspondingly, one remote attestation request is used to request to attest whether the target TA is securely run in the TEE of the prover, where the remote attestation request includes the identifier of the target TA. Certainly, in some other possible embodiments, the verifier can alternatively request to verify a plurality of target TAs at a time. Correspondingly, one remote attestation request is used to request to attest whether the plurality of target TAs are securely run in the TEE of the prover, where the remote attestation request includes identifiers of the plurality of target TAs.

Optionally, to improve security of the remote attestation, the remote attestation request further carries an anti-replay attack parameter. The anti-replay attack parameter includes a nonce and/or a timestamp for anti-replay attack. The anti-replay attack parameter can prevent a replay attack in a procedure of communication between the verifier and the prover. Certainly, to prevent another type of malicious attack, the remote attestation request may alternatively include a parameter for preventing a corresponding attack.

**Step 402:** The prover receives the remote attestation request from the verifier.

In embodiments of this application, the prover includes a plurality of modules. Some modules are located on the REE side, and other modules are located on the TEE side. The modules on the REE side can communicate with the verifier, and the prover may receive the remote attestation request by using a module on the REE side.

Optionally, the prover is further configured to run a secondary CA in the REE. In other words, the secondary CA in the prover is located on the REE side, and the secondary CA can be used to communicate with the verifier. In view of this, in embodiments of this application, the secondary CA in the prover receives the remote attestation request.

Optionally, one secondary CA is run on the prover. Alternatively, a plurality of secondary CAs are run on the prover. The plurality of secondary CAs one-to-one correspond to a plurality of CAs, and the plurality of CAs one-to-one correspond to the plurality of TAs of the verifier. In other words, the plurality of secondary CAs one-to-one correspond to the plurality of TAs. In this case, in the plurality of secondary CAs, a secondary CA corresponding to the target TAreceives the remote attestation request. For example, the remote attestation request carries the identifier of the target TA. After receiving the remote attestation request, a verified ingress port parses the remote attestation request to obtain the identifier of the target TA. The secondary CA corresponding to the identifier of the target TA is determined based on correspondences between the plurality of TAs and the plurality of secondary CAs. In this way, the remote attestation request is transferred to the corresponding secondary CA.

Optionally, in some other embodiments, the prover may alternatively receive the remote attestation request by using the CA. It should be noted that a plurality of CAs are run on the prover. The plurality of CAs one-to-one correspond to the plurality of TAs of the verifier, and each CA can communicate with a corresponding TA. At the prover, a CA corresponding to the target TA receives the remote attestation request. For example, there is a communication interface between the verifier and each CA of the verifier. The verifier sends the remote attestation request to the corresponding CA through the communication interface, and the CA sends the remote attestation request to a corresponding TA, namely, the target TA.

**Step 403:** The prover obtains measurement information of the target TA, where the measurement information of the target TA includes first measurement information, and the first measurement information is obtained by the prover measuring, in a procedure of running the target TA, data of the target TA during running.

In embodiments of this application, the prover measures, in the procedure of running the target TA, the data of the target TA in a memory during running, to obtain the first measurement information. For example, in the procedure of running the target TA, the prover scans and obtains the data of the target TA in the memory, and measures the data, to obtain the first measurement information. The data of the target TA in the memory includes a code segment, a read-only data segment, and a dynamic/static link library of the target TA, some data annotated by a user, and the like. A specific measurement method is not limited in embodiments of this application. The measurement method may be a hash operation or another method, where the hash operation may be SHA256, SHA512, MD5, or the like.

It should be noted that the first measurement information indicates a status of the target TA during running. In other words, the prover can attest, based on the first measurement information, that the target TA is secure during running, to ensure security of the target TA during running.

Optionally, the measurement information of the target TA further includes second measurement information. The second measurement information indicates a status of the target TA during startup, and the second measurement information is obtained by the prover from secure storage space through reading. In other words, the prover can alternatively attest, based on the second measurement information, that the target TA is secure during startup, to ensure security of the target TA during startup.

For example, the secure storage space stores measurement information corresponding to each of the one or more of TAs, and the measurement information in the secure storage space indicates a status of a corresponding TA during startup. The prover obtains, based on the identifier of the target TA, the measurement information corresponding to the target TA from measurement information corresponding to the one or the plurality of TAs, to obtain the second measurement information.

The secure storage space is a part of the TEE-side storage space. For example, the secure storage space is a part of the TEE-side memory space.

Optionally, in embodiments of this application, the prover receives the remote attestation request by using a secondary CA module on the REE side, and the prover is further configured to run a trusted module in the TEE. In view of this, after receiving the remote attestation request, the secondary CA sends the remote attestation request to the trusted module, and the trusted module obtains the measurement information of the target TA based on the remote attestation request.

The secondary CA can communicate with the trusted module through a TEE C-API interface, to transfer the remote attestation request to the trusted module.

Optionally, the trusted module includes a secondary TA and a trusted computing base module. The secondary CA sends the remote attestation request to the secondary TA, and the secondary TA sends the remote attestation request to the trusted computing base module, to request the trusted computing base module to provide an attestation report. The trusted computing base module obtains the measurement information of the target TA based on the remote attestation request.

Optionally, when one secondary CA and one secondary TA are run on the prover, the secondary CA sends the remote attestation request to the secondary TA. When a plurality of secondary CAs and a plurality of secondary TAs are run on the prover, in the plurality of secondary CAs, a secondary CA corresponding to the target TA sends the remote attestation request to a corresponding secondary TA after receiving the remote attestation request. It should be noted that the following uses an example in which one secondary CA and one secondary TA are run on the prover for description.

Optionally, the secondary CA may first perform some preprocessing such as user identity authentication and attack mitigation on the remote attestation request. For example, the secondary CA parses the remote attestation request, to obtain the identifier of the target TA and/or the identifier of the verifier, and performs identity authentication on the identifier of the verifier and/or the identifier of the target TA. The remote attestation request further carries the anti-replay attack parameter. The secondary CA may further parse the remote attestation request, to obtain the anti-replay attack parameter, and perform replay attack verification based on the anti-replay attack parameter, to determine whether the currently received remote attestation request is a replay attack. After the identity authentication succeeds and the secondary CA determines that the remote attestation request is not a replay attack, the secondary CA sends the remote attestation request to the trusted module. After the identity authentication succeeds and/or the secondary CA determines that the remote attestation request is a replay attack, the secondary CA generates prompt information indicating to reject the current remote attestation.

Optionally, after receiving the attestation request, the trusted module may alternatively perform some preprocessing such as user identity authentication and attack mitigation on the remote attestation request. For example, the secondary TA performs preprocessing. It should be noted that the preprocessing may alternatively be performed by another module in the prover. This is not limited in embodiments of this application. Certainly, the preprocessing may alternatively be separately performed by a plurality of modules in the prover. For example, user identity authentication is performed by the secondary CA, and attack mitigation is performed by the secondary TA.

**Step 404:** The prover sends a first attestation report to the verifier, where the first attestation report includes the measurement information of the target TA.

Optionally, in embodiments of this application, the secondary CA is run on the prover, and the secondary CA sends the first attestation report to the verifier. In some other embodiments, the CA in the prover sends the first attestation report to the verifier. The first attestation report includes the measurement information of the target TA.

To improve trustworthiness of the measurement information that is of the target TA and that is provided by the prover for the verifier, in embodiments of this application, the first attestation report further includes first signature information and a certificate of an AK. The first signature information is signature information obtained by the prover signing the measurement information of the target TA by using the AK, and the certificate of the AK is used by the verifier to verify the first signature information.

It should be noted that there are a plurality of manners for generating the AK and the certificate of the AK. The following describes three generation manners.

Generation manner 1: The prover independently generates the AK and the certificate of the AK without participation of another device (for example, an AS).

In the generation manner 1, the prover generates a public-private key pair based on a key generation request, uses a private key in the public-private key pair as the AK, and signs a public key in the public-private key pair by using a device root key (DRK) of the prover, to obtain the certificate of the AK.

The prover may generate the public-private key pair in any key derivation algorithm. The key derivation algorithm is a random key derivation algorithm, a key derivation algorithm based on device hardware information or other information, or another algorithm. This is not limited in embodiments of this application.

Optionally, in the generation manner 1, the key generation request carries first indication information, and the first indication information indicates that an AS does not need to participate in a key generation procedure. In other words, this solution may specify whether the AS needs to participate in a procedure of generating the AK and the certificate of the AK.

Optionally, the trusted module is run on the prover. In the generation manner 1, the trusted module generates a public-private key pair based on a key generation request, uses a private key in the public-private key pair as the AK, and signs a public key in the public-private key pair by using a DRK of the prover, to obtain the certificate of the AK. Optionally, the trusted module includes the secondary TA and the trusted computing base module. The trusted computing base module can be configured to generate the AK and the certificate of the AK. For example, the trusted computing base module includes a TEE-OS, and the TEE-OS can be used to generate the AK and the certificate of the AK.

Generation manner 2: The prover and an AS jointly participate in generating the AK and the certificate of the AK, and a non-anonymous key generation protocol is used in a key generation procedure.

In the generation manner 2, the prover generates a public-private key pair based on a key generation request, uses a private key in the public-private key pair as the AK, and uses a public key in the public-private key pair as a public key corresponding to the AK. The prover signs a TCB of the prover and the public key corresponding to the AK by using a DRK of the prover, to obtain second signature information. The prover sends the TCB and the second signature information to the AS, to indicate the AS to verify the second signature information and the TCB, and when the verification succeeds, signs the public key corresponding to the AK by using a private key of the AS, to obtain the certificate of the AK. The prover receives the certificate of the AK from the AS. It should be noted that in the generation manner 2, the non-anonymous key generation protocol is used in the procedure of generating the AK and the certificate of the AK. In other words, the generated AK complies with a non-anonymous key format.

It should be noted that the TCB of the prover is a set of trusted components of the prover, including one or more of the following: trusted hardware, firmware, and software. The TCB of the prover is stored on the TEE side of the prover.

In embodiments of this application, the AS can obtain a certificate of the DRK of the prover, and obtain, from the certificate of the DRK, a public key corresponding to the DRK, and the AS verifies the second signature information by using the public key corresponding to the DRK. In addition, the AS further stores the TCB of the prover. When verification on the second signature information succeeds, the AS compares the stored TCB of the prover with the received TCB, to verify the received TCB. After verification on the received TCB succeeds, the AS obtains the public key corresponding to the AK included in the second signature information, signs the public key corresponding to the AK by using the private key of the AS, to obtain the certificate of the AK, and sends the certificate of the AK to the prover.

Optionally, the AS includes a fingerprint database, and the fingerprint database stores the certificate of the DRK and the TCB of the prover. Alternatively, in some other embodiments, a storage node stores a fingerprint database, and the fingerprint database stores the certificate of the DRK and the TCB of the prover. The AS can obtain the certificate of the DRK and the TCB of the prover from the storage node. Alternatively, the prover further sends the certificate of the DRK to the AS, and the AS stores the TCB of the prover. It should be noted that data stored in the fingerprint database is accurate and is not easily tampered with.

Optionally, in the generation manner 2, the key generation request carries second indication information, and the second indication information indicates that the AS needs to participate in the key generation procedure. Optionally, the second indication information further indicates that the non-anonymous key generation protocol is used in the key generation procedure.

Optionally, a secondary CA and a trusted module are run on the prover. In the generation manner 2, the trusted module generates a public-private key pair based on a key generation request, uses a private key in the public-private key pair as the AK, and uses a public key in the public-private key pair as a public key corresponding to the AK. The trusted module obtains the TCB of the prover, and signs the TCB and the public key corresponding to the AK by using the DRK of the prover, to obtain second signature information. The trusted module sends the TCB and the second signature information to the secondary CA. The secondary CA sends the TCB and the second signature information to the AS, receives the certificate of the AK from the AS, and sends the received certificate of the AK to the trusted module.

When the trusted module includes a secondary TA and a trusted computing base module, the trusted computing base module is configured to: generate a public-private key pair based on a key generation request, use a private key in the public-private key pair as the AK, and use a public key in the public-private key pair as a public key corresponding to the AK. The trusted module obtains the TCB of the prover, and signs the TCB and the public key corresponding to the AK by using the DRK of the prover, to obtain second signature information. The trusted module sends the TCB and the second signature information to the secondary TA, and then the secondary TA sends the TCB and the second signature information to the secondary CA. The secondary CA sends the TCB and the second signature information to the AS, receives the certificate of the AK from the AS, and sends the received certificate of the AK to the secondary TA. Then, the secondary TA sends the certificate of the AK to the trusted computing base module.

Generation manner 3 for the AK and the certificate of the AK: The prover and an AS jointly participate in generating the AK and the certificate of the AK, and an anonymous key generation protocol is used in a key generation procedure.

In the generation manner 3, the prover signs, based on a key generation request, a trusted computing base (TCB) of the prover by using a DRK of the prover, to obtain fifth signature information. The prover sends the TCB and the fifth signature information to the AS, to indicate the AS to verify the fifth signature information and the TCB, and when the verification succeeds, generates the AK and the certificate of the AK in an anonymous key generation algorithm. The prover receives the AK and the certificate of the AK from the AS. It should be emphasized that in the generation manner 3, the anonymous key generation protocol is used in the procedure of generating the AK and the certificate of the AK. In other words, the generated AK complies with an anonymous key format.

The anonymous key generation protocol is a direct anonymous attestation (direct anonymous attestation, DAA) protocol, an enhanced privacy identification (enhanced privacy identification, EPID) protocol, or another anonymous protocol. This is not limited in embodiments of this application. The EPID protocol is a variant of the DAA protocol. In addition, an implementation in which the AS verifies the fifth signature information and the TCB is similar to an implementation in which the AS verifies the second signature information and the TCB in the generation manner 2. Details are not described herein again.

Optionally, in the generation manner 3, the key generation request carries third indication information, and the third indication information indicates that the AS needs to participate in a key generation procedure. Optionally, the third indication information further indicates that the anonymous key generation protocol is used in the key generation procedure.

Optionally, a secondary CA and a trusted module are run on the prover. In the generation manner 3, the trusted module, based on the key generation request, obtains the TCB of the prover, and signs the TCB by using the DRK of the prover, to obtain the fifth signature information. The trusted module sends the TCB and the fifth signature information to the secondary CA. The secondary CA sends the TCB and the fifth signature information to the AS, receives the AK and the certificate of the AK from the AS, and sends the received AK and the certificate of the AK to the trusted module.

When the trusted module includes a secondary TA and a trusted computing base module, the trusted computing base module, based on the key generation request, obtains the TCB of the prover, and signs the TCB by using the DRK of the prover, to obtain the fifth signature information. The trusted computing base module sends the TCB and the fifth signature information to the secondary TA, and then the secondary TA sends the TCB and the fifth signature information to the secondary CA. The secondary CA sends the TCB and the fifth signature information to the AS, receives the AK and the certificate of the AK from the AS, and sends the received AK and the certificate of the AK to the secondary TA. Then, the secondary TA sends the AK and the certificate of the AK to the trusted computing base module.

Optionally, in the three generation manners, the secondary TA first obtains the key generation request, and sends the key generation request to the trusted module. Optionally, the secondary TA performs preprocessing such as user identity authentication and attack mitigation on the key generation request, and after the preprocessing succeeds, sends the key generation request to the trusted computing base module. For example, the key generation request carries identity information of a request initiator, and the secondary TA verifies the identity information of the initiator. The secondary TA may further verify whether a key generation request is frequently received in a historical period of time before current time, and such frequent request is a malicious attack. For example, when a quantity of times of reception of the key generation request in the historical period of time before the current time exceeds a threshold, the secondary TA generates prompt information indicating to reject the current key generation request.

It should be noted that the first indication information, the second indication information, or the third indication information carried in the key generation request is used to specify whether the AS participates in the key generation procedure and whether the key is generated anonymously. When one of the three generation manners may be selected, the key generation request carries corresponding indication information. Alternatively, when one of the three generation manners may be selected, but the key generation request does not carry any of the indication information, a target generation manner is used by default. Any one of the three generation manners may be set as the target generation manner. Alternatively, in a scenario without an AS, the generation manner 1 is used by default. In this case, the key generation request does not carry any of the indication information. In a scenario with an AS, if the generation manner 2 or the generation manner 3 is used by default, the key generation request does not carry any of the indication information.

It should be further noted that the key generation request may be periodically triggered for generation based on a configuration of the prover, may be triggered based on a request of a device for a single time, or may be triggered in another manner. The triggering manners may be separately applied or applied in combination. This is not limited in embodiments of this application.

In addition, to improve security, after obtaining the AK and the certificate of the AK, the prover securely stores the AK and the certificate of the AK. Optionally, the trusted module securely stores the AK and the certificate of the AK. Specifically, the trusted computing base module may securely store the AK and the certificate of the AK. The secure storage manner is a manner of writing the AK and the certificate of the AK onto a secure storage, or a manner of using sealing/unsealing (seal/unseal) primitives of confidential computing.

In the implementations above, the first attestation report includes the measurement information of the target TA, or further includes the first signature information and the certificate of the AK, so that the verifier evaluates trustworthiness of the measurement information of the target TA. Optionally, to further improve reliability of the remote attestation, the first attestation report provided by the prover for the verifier may further include other information. This is described in detail in the following.

In an implementation, the first attestation report further includes a TCB of the prover and third signature information, and the third signature information is signature information obtained by the prover signing the TCB by using an AK. In this way, the verifier can further verify the TCB of the prover, to improve trustworthiness of the measurement information that is of the target TA and that is provided by the prover.

When the secondary CA, the secondary TA, and the trusted computing base module are run on the prover, the trusted computing base module obtains the TCB of the prover, and signs the TCB by using the AK, to obtain the third signature information. The trusted computing base module sends the TCB and the third signature information to the secondary TA, and then the secondary TA sends the TCB and the third signature information to the secondary CA. The secondary CA generates the first attestation report, where the first attestation report includes the measurement information of the target TA, the first signature information, the certificate of the AK, the TCB of the prover, and the third signature information.

Optionally, the trusted computing base module generates a second attestation report, and sends the second attestation report to the secondary TA, and then the secondary TA sends the second attestation report to the secondary CA. The second attestation report includes the measurement information of the target TA, the first signature information, the certificate of the AK, the TCB, and the third signature information. In other words, the first attestation report is the same as the second attestation report.

It should be noted that because the third signature information is signature information obtained by the prover signing the TCB by using the AK, the AS does not need to participate in the remote attestation procedure.

In a second implementation, the first attestation report further includes a verification result that verification by the AS on the third signature information and the TCB of the prover succeeds, and includes fourth signature information. The third signature information is signature information obtained by the prover signing the TCB by using the AK, the fourth signature information is signature information obtained by the AS signing the verification result by using the private key of the AS, and the verification result includes the TCB.

In other words, the prover signs the TCB of the prover by using the AK, to obtain the third signature information, and sends the TCB and the third signature information to the AS. The AS verifies the third signature information by using the public key of the AK. After verification on the third signature information succeeds, the AS verifies the TCB. After verification on the TCB succeeds, the AS signs the verification result by using the private key of the AS, to obtain the fourth signature information. The verification result includes the TCB. The AS sends the fourth signature information and the verification result to the prover. The prover includes in the first attestation report the verification result and the fourth signature information. For an implementation in which the AS verifies the TCB, refer to the related content in the foregoing descriptions about generating the AK and the certificate of the AK. Details are not described herein again.

Optionally, the prover generates a third attestation report based on the TCB and the third signature information, and sends the third attestation report to the AS. The third attestation report includes the TCB and the third signature information.

When the secondary CA, the secondary TA, and the trusted computing base module are run on the prover, the trusted computing base module obtains the TCB of the prover from a secure memory, and signs the TCB by using the AK, to obtain the third signature information, and sends the TCB and the third signature information to the secondary TA. The secondary TA sends the TCB and the third signature information to the secondary CA, and the secondary CA forwards the TCB and the third signature information to the AS. The AS verifies the third signature information by using the public key of the AK. After verification on the third signature information succeeds, the AS verifies the TCB. After verification on the TCB succeeds, the AS signs the verification result by using the private key of the AS, to obtain the fourth signature information. The verification result includes the TCB. The AS sends the fourth signature information and the verification result to the secondary CA of the prover. The secondary CA includes in the first attestation report the verification result and the fourth signature information.

Optionally, the trusted computing base module generates a second attestation report, and sends the second attestation report to the secondary TA, and then the secondary TA sends the second attestation report to the secondary CA. The second attestation report includes the measurement information of the target TA, the first signature information, the certificate of the AK, the TCB, and the third signature information. The secondary CA generates a third attestation report, and sends the third attestation report to the AS, where the third attestation report includes the TCB and the third signature information. After verification on the third signature information succeeds, the AS generates a fourth attestation report, and sends the fourth attestation report to the secondary CA, where the fourth attestation report includes a verification result and fourth signature information.

Optionally, in an implementation in which the AS needs to verify the TCB, after obtaining the TCB of the prover, and signing the TCB by using the AK to obtain the third signature information, the trusted computing base module sends the TCB and the third signature information to the secondary TA, and the trusted computing base module may further include in information sent to the secondary TA some other information based on a requirement, for example, one or more of the following: information about the secondary TA, a timestamp, and a UUID of the target TA.

In the second implementation, the AS participates in the remote attestation procedure, and the AS can be configured to verify the TCB of the prover. The verification result returned to the verifier also includes the TCB of the prover, and the verifier can further verify the TCB of the prover subsequently.

In a third implementation, the first attestation report further includes a verification result that verification by the AS on the third signature information and the TCB of the prover succeeds, and includes fourth signature information. The third signature information is signature information obtained by the prover signing the TCB by using the AK, the fourth signature information is signature information obtained by the AS signing the verification result by using the private key of the AS, and the verification result does not include the TCB.

It can be learned that the third implementation differs from the second implementation in that the verification result returned by the AS to the prover does not include the TCB, and the verifier does not need to verify the TCB of the prover. For a specific implementation procedure of the third implementation, refer to the second implementation. Details are not described herein again.

It should be noted that in the third implementation, the verification result that the verification performed by the AS succeeds includes information indicating that the verification succeeds, for example, including information such as "PASSED" or "device verification succeeds". In the second implementation, the verification result that the verification performed by the AS succeeds includes the TCB of the prover, and optionally, further includes information indicating that the verification succeeds. In the second implementation and the third implementation, if the verification performed by the AS fails, the AS sends a verification failure response to the prover. A verification result carried in the verification failure response includes information prompting for a verification failure, for example, including information such as "UNPASSED" or "device verification fails". Optionally, after receiving the verification failure response, the prover generates information prompting for a remote attestation failure.

**Step 405:** The verifier receives the first attestation report from the prover.

**Step 406:** The verifier verifies the first attestation report, to determine whether the target TA is securely run in the TEE.

In embodiments of this application, after receiving the first attestation report, the verifier verifies the first attestation report, that is, to evaluate trustworthiness of the first attestation report, to determine whether the target TA is securely run in the TEE of the prover.

Optionally, the verifier stores an attestation baseline file, and the attestation baseline file is used by the verifier to verify the first attestation report. The attestation baseline file includes expected measurement information of the target TA, and the expected measurement information of the target TA is measurement information that is obtained by the verifier and that indicates that the target TA is in a secure state. In view of this, the verifier compares the measurement information of the target TA in the first attestation report with the expected measurement information of the target TA in the attestation baseline file, and determines, when the measurement information of the target TA is consistent with the expected measurement information of the target TA, that the target TA is securely run in the TEE.

When the measurement information of the target TA includes the first measurement information, the attestation baseline file includes expected first measurement information of the target TA, where the expected first measurement information is measurement information indicating a secure running state of the target TA. In view of this, the verifier compares the first measurement information in the first attestation report with the expected first measurement information in the attestation baseline file, and determines, when the first measurement information is consistent with the expected first measurement information, that the target TA is securely run in the TEE.

When the measurement information of the target TA includes the first measurement information and the second measurement information, the attestation baseline file further includes expected second measurement information of the target TA, where the expected second measurement information is measurement information indicating a secure startup state of the target TA. In view of this, the verifier compares the first measurement information in the first attestation report with the expected first measurement information in the attestation baseline file, and compares the second measurement information in the first attestation report with the expected second measurement information in the attestation baseline file, and determines, when the first measurement information is consistent with the expected first measurement information and the second measurement information is consistent with the expected second measurement information, that the target TA is securely run in the TEE.

In embodiments of this application, the attestation baseline file is determined by a software development kit (software development kit, SDK) for developing the TA or is provided by a TA provider. It should be noted that because data of the TA during startup is relatively fixed, the expected second measurement information is relatively easily determined through measurement. Data of the TA during running may be relatively unfixed. For example, some processes are random during running of the TA. Therefore, it may be relatively difficult to determine the expected first measurement information, or expected first measurement information obtained through a plurality of times of measurement may differ from each other. In view of this, after obtaining the measurement information that is of the target TA and that is provided by the prover, the verifier compares the measurement information of the target TA with the expected first measurement information in the attestation baseline file, to obtain a trustworthiness level through the comparison, and determines, when the trustworthiness level exceeds a threshold, a secure running state of the target TA in the TEE. Alternatively, the verifier may determine, in another manner, a trustworthiness level of the measurement information that is of the target TA and that is provided by the prover.

When the first attestation report includes the measurement information of the target TA, the first signature information, and the certificate of the AK, the verifier obtains the public key corresponding to the AK from the certificate of the AK, and verifies the first signature information by using the public key corresponding to the AK. Optionally, after verification on the first signature information succeeds, the verifier evaluates trustworthiness of the measurement information of the target TA. When verification on the first signature information fails, the verifier determines that the target TA is not securely run in the TEE of the prover. The first signature information is signature information obtained by the prover signing the measurement information of the target TA by using the AK.

When the first attestation report includes the measurement information of the target TA, the TCB of the prover, and the third signature information, the verifier verifies the third signature information by using the public key corresponding to the AK. Optionally, after verification on the third signature information succeeds, the verifier evaluates trustworthiness of the measurement information of the target TA and verifies the TCB of the prover. When verification on the third signature information and/or the TCB of the prover fails, the verifier determines that the target TA is not securely run in the TEE of the prover. The third signature information is signature information obtained by the prover signing the TCB of the prover by using the AK. The verifier can obtain, from the certificate of the AK carried in the first attestation report, the public key corresponding to the AK. In other words, the first attestation report further includes the certificate of the AK. Alternatively, the verifier pre-stores the certificate of the AK or the public key corresponding to the AK.

The attestation baseline file further includes expected TCB information. The verifier compares the TCB in the first attestation report with the expected TCB information in the attestation baseline file, and determines, when the TCB in the first attestation report is consistent with the expected TCB information, that the verification on the TCB of the prover succeeds.

When the first attestation report includes the measurement information of the target TA, the first signature information, the certificate of the AK, the TCB of the prover, and the third signature information, the verifier obtains the public key corresponding to the AK from the certificate of the AK, and verifies both the first signature information and the third signature information by using the public key corresponding to the AK. Optionally, after verification on both the first signature information and the third signature information succeeds, the verifier evaluates trustworthiness of the measurement information of the target TA, and verifies the TCB of the prover. When verification on one or more of the following: the first signature information, the third signature information, and the TCB of the prover fails, the verifier determines that the target TA is not securely run in the TEE of the prover.

When the first attestation report includes the measurement information of the target TA, the verification result that verification by the AS on the third signature information and the TCB of the prover succeeds, and includes fourth signature information, and the verification result includes the TCB, the verifier verifies the fourth signature information by using the public key of the AS. Optionally, after verification on the fourth signature information succeeds, the verifier evaluates trustworthiness of the measurement information of the target TA, and verifies the TCB of the prover. When verification on one or more of the following: the fourth signature information and the TCB of the prover fails, the verifier determines that the target TA is not securely run in the TEE of the prover.

When the first attestation report includes the measurement information of the target TA, the first signature information, the certificate of the AK, the verification result that verification by the AS on the third signature information and the TCB of the prover succeeds, and includes fourth signature information, and the verification result includes the TCB, the verifier obtains the public key corresponding to the AK from the certificate of the AK, verifies the first signature information by using the public key corresponding to the AK, and verifies the fourth signature information by using the public key of the AS. Optionally, after verification on both the first signature information and the fourth signature information succeeds, the verifier evaluates trustworthiness of the measurement information of the target TA, and verifies the TCB of the prover. When verification on one or more of the following: the first signature information, the fourth signature information, and the TCB of the prover fails, the verifier determines that the target TA is not securely run in the TEE of the prover.

When the first attestation report includes the measurement information of the target TA, the verification result that verification by the AS on the third signature information and the TCB of the prover succeeds, and includes fourth signature information, and the verification result does not include the TCB, the verifier verifies the fourth signature information by using the public key of the AS. Optionally, after verification on the fourth signature information succeeds, the verifier evaluates trustworthiness of the measurement information of the target TA. When verification on the fourth signature information fails, the verifier determines that the target TA is not securely run in the TEE of the prover.

When the first attestation report includes the measurement information of the target TA, the first signature information, the certificate of the AK, the verification result that verification by the AS on the third signature information and the TCB of the prover succeeds, and includes fourth signature information, and the verification result does not include the TCB, the verifier obtains the public key corresponding to the AK from the certificate of the AK, verifies the first signature information by using the public key corresponding to the AK, and verifies the fourth signature information by using the public key of the AS. Optionally, after verification on both the first signature information and the fourth signature information succeeds, the verifier evaluates trustworthiness of the measurement information of the target TA. When verification on the first signature information and/or the fourth signature information fails, the verifier determines that the target TA is not securely run in the TEE of the prover.

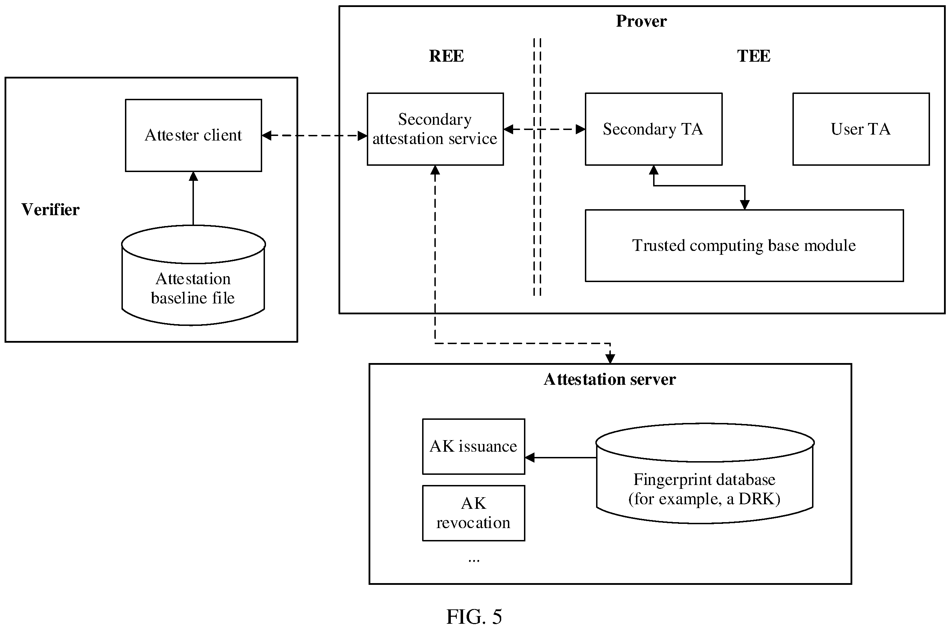

The following uses examples to describe the remote attestation method provided in embodiments of this application again with reference to architectures of systems shown in FIG. 5 to FIG. 7.

In FIG. 5, a verifier is configured to run an attester client, and the verifier further stores an attestation baseline file. The attester client is configured to: initiate a remote attestation request to a prover, receive a first attestation report returned by the prover, and verify the first attestation report based on the attestation baseline file.

The prover is configured to: run a secondary attestation service (including a secondary CA) in an REE, and run some user TAs in a TEE, including a TA of the prover. The prover is further configured to run, in the TEE, a trusted module, including a secondary TA and a trusted computing base module. The secondary CA is configured to communicate with the secondary TA, to send the remote attestation request to the secondary TA. The secondary TA is configured to request for an attestation report from the trusted computing base module. The trusted computing base module is configured to obtain measurement information of a target TA and first signature information. When an AS and/or the verifier do or does not need to verify a TCB of the prover, the secondary CA generates the first attestation report based on received information, and returns the first attestation report to the verifier, where the first attestation report includes the measurement information of the target TA, the first signature information, and a certificate of an AK. When an AS and/or the verifier need or needs to verify a TCB of the prover, the trusted computing base module is further configured to obtain the TCB of the prover and third signature information. The trusted computing base module is further configured to return obtained information to the secondary TA, and the secondary TA is configured to return the received information to the secondary CA.

When an AS does not need to verify a TCB of the prover, but the verifier needs to verify the TCB of the prover, the secondary CA generates the first attestation report based on received information, and returns the first attestation report to the verifier, where the first attestation report includes the measurement information of the target TA, the first signature information, a certificate of an AK, the TCB of the prover, and third signature information.

When an AS needs to verify a TCB of the prover, the secondary CA is configured to send the received TCB of the prover and third signature information to the AS. The AS is configured to return a verification result and fourth signature information to the secondary CA after verification on the TCB of the prover and the third signature information based on the AK and a fingerprint database succeeds. When the verifier needs to verify the TCB of the prover, the verification result includes the TCB of the prover. When the verifier does not need to verify the TCB of the prover, the verification result does not include the TCB of the prover. The secondary CA generates the first attestation report based on received information, and returns the first attestation report to the verifier, where the first attestation report includes the measurement information of the target TA, the first signature information, a certificate of an AK, the verification result, and fourth signature information.

In addition, when the AS participates in a procedure of generating the AK and the certificate of the AK, the AS is further configured to issue and revoke the AK and the certificate of the AK or the like as described in related descriptions of the foregoing embodiments.

It can be learned from the architecture of the system shown in FIG. 5 and related descriptions of FIG. 5 that the AS may or may not participate in a remote attestation procedure, that is, the AS is optional in the remote attestation procedure. The AS may or may not participate in the procedure of generating the AK and the certificate of the AK, that is, the AS is optional in the key generation procedure. In addition, no user TA participates in the remote attestation procedure, so that a malicious attack cannot be hidden in the remote attestation procedure. Reliability of the remote attestation is improved.

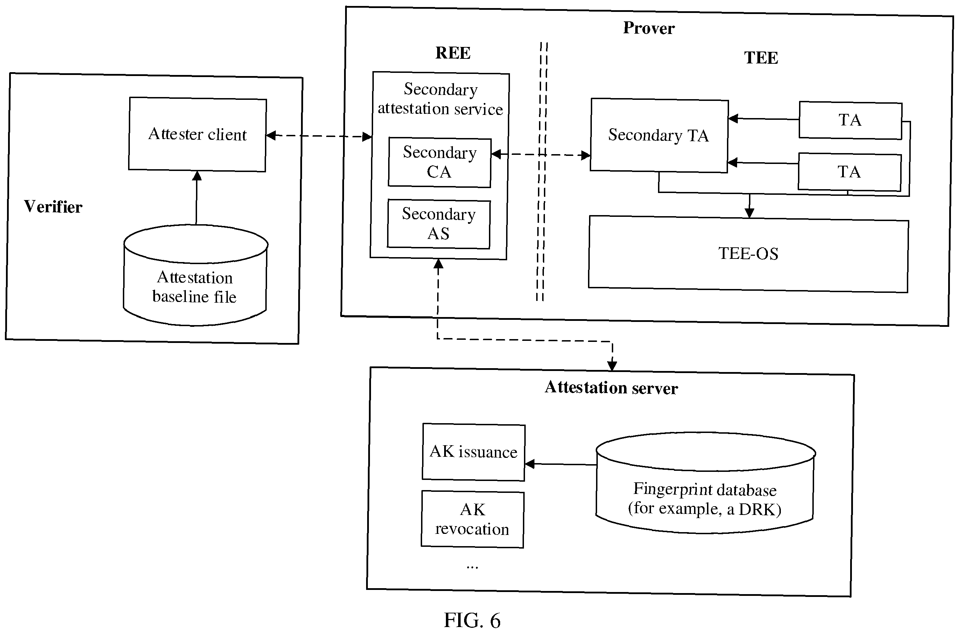

FIG. 6 is a diagram of an architecture of a system obtained by elaborating modules of the prover in the architecture of the system shown in FIG. 5. Compared with FIG. 5, in FIG. 6, a secondary attestation service further includes a secondary AS. The secondary AS serves as a bridge for communication between the secondary CA and an AS, and is configured to implement communication between the secondary CA and the AS. In FIG. 6, a TEE-OS is configured to implement a function of the trusted computing base module in FIG. 5. In the related descriptions of FIG. 5, the remote attestation method without participation of the user TA is described. The following uses an example to describe, with reference to FIG. 6, an attestation procedure with participation of the user TA.

In a remote attestation procedure, a verifier sends a remote attestation request to a prover, and a corresponding user CA in the prover (namely, a CA of the verifier, which is not shown in FIG. 6) receives the remote attestation request. The user CA sends the remote attestation request to a corresponding target TA, and the target TA requests to obtain an attestation report from a trusted computing base module. After obtaining information related to the attestation report, the trusted computing base module returns the obtained information to the target TA. The target TA returns the received information to the user CA, and the user CA is further used for communication between the verifier and the AS. This is equivalent to that the user CA completes a related function of the secondary CA, and that the target TA completes a related function of the secondary TA. For detailed implementation procedures, refer to the foregoing related descriptions. Details are not described herein again.

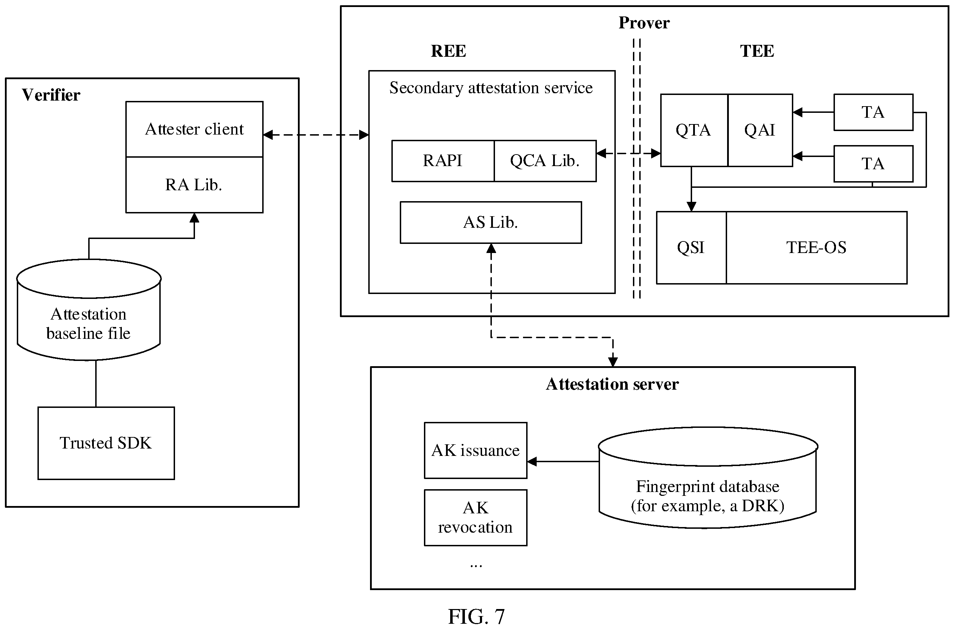

FIG. 7 is a diagram of an architecture of a system obtained by elaborating the architecture of the system shown in FIG. 6. In comparison with FIG. 6, in FIG. 7, a verifier further includes a remote attestation link library (for example, RA Lib.), and an attester client can obtain an attestation baseline file based on the remote attestation link library. The attestation baseline file may be generated based on a trusted SDK for developing a TA. A secondary CA (namely, a quoting CA (quoting CA, QCA)) in a prover includes an interface (namely, an RAPI) for communicating with the verifier and a data link library (namely, QCA Lib.) for communicating with the secondary TA. The QCA may be implemented in a plurality of forms, for example, source code, a static library, or a dynamic library. A secondary AS has a data link library (namely, AS Lib.) for communicating with an AS. The secondary TA has an interface (namely, a QAI) for communicating with the TA. A TEE-OS has an interface (namely, a QSI) for communicating with a QTA. Based on the architecture of the system shown in FIG. 7, modules can communicate with each other through corresponding interfaces, to transfer information. In this way, a remote attestation method provided in embodiments of this application is implemented.

It should be noted that the architectures of the systems shown in FIG. 6 and FIG. 7 may be TrustZone architectures. In other words, a remote attestation method in a TrustZone architecture can be implemented based on the architectures of the systems shown in FIG. 6 and FIG. 7.

In conclusion, in a remote attestation procedure according to embodiments of this application, an attestation report provided by the prover for the verifier includes first measurement information of a target TA, where the first measurement information is obtained by the prover measuring, in a procedure of running the target TA, data of the target TA during running. In other words, the first measurement information can indicate a status of the target TA during running. If the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of the remote attestation. In other words, this solution can attest that the target TA is also secure during running, to ensure reliability of the remote attestation.

In addition, in some implementations of this solution, the target TA does not need to participate in the remote attestation procedure. In other words, the target TA is unaware, so that a malicious attack cannot be hidden in the remote attestation procedure, to reduce false attestations and further improve reliability of the remote attestation. In some other implementations, the AS does not need to participate in the remote attestation procedure. In this way, remote attestation is less complex, and there are less "stranglehold" problems.

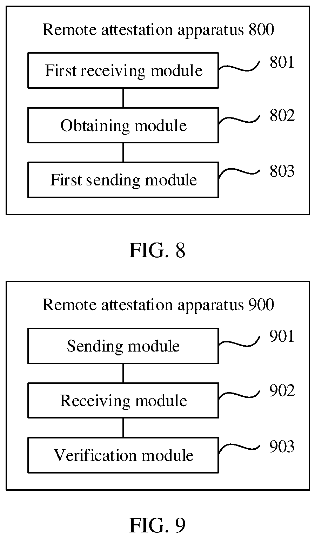

FIG. 8 is a diagram of a structure of a remote attestation apparatus 800 according to an embodiment of this application. The remote attestation apparatus 800 may be implemented as a part or all of a computer device by using software, hardware, or a combination thereof. The computer device may be a TrustZone server or an intelligent terminal for the foregoing embodiments. In embodiments of this application, the apparatus 800 is used in a prover. Refer to FIG. 8. The apparatus 800 includes a first receiving module 801, an obtaining module 802, and a first sending module 803.

The first receiving module 801 is configured to receive a remote attestation request from a verifier, where the remote attestation request is used to request to attest whether a target TA is securely run in a TEE of the prover, and the target TA is any TA of the verifier.

The obtaining module 802 is configured to obtain measurement information of the target TA, where the measurement information of the target TA includes first measurement information, and the first measurement information is obtained by the obtaining module 802 measuring, in a procedure in which the prover runs the target TA, data of the target TA during running.

The first sending module 803 is configured to send a first attestation report to the verifier, where the first attestation report includes the measurement information of the target TA, and the first attestation report is used by the verifier to determine whether the target TA is securely run in the TEE.

Optionally, the measurement information of the target TA further includes second measurement information. The second measurement information indicates a status of the target TA during startup, and the second measurement information is obtained by the obtaining module 802 from secure storage space through reading.

Optionally, the prover is further configured to run a secondary CA in an REE, and run a trusted module in the TEE.

The first receiving module 801 is configured to receive the remote attestation request by using the secondary CA.

The obtaining module 802 is configured to: send the remote attestation request to the trusted module by using the secondary CA, and obtain, based on the remote attestation request, the measurement information of the target TA by using the trusted module.

Optionally, the first attestation report further includes first signature information and a certificate of an AK, the first signature information is signature information obtained by the obtaining module 802 signing the measurement information of the target TA by using the AK, and the certificate of the AK is used by the verifier to verify the first signature information.

Optionally, the apparatus 800 further includes:
a first generation module, configured to: generate a public-private key pair based on a key generation request, and use a private key in the public-private key pair as the AK; and
a first signing module, configured to sign a public key in the public-private key pair by using a DRK of the prover, to obtain the certificate of the AK.

Optionally, the key generation request carries first indication information, and the first indication information indicates that an AS does not need to participate in a key generation procedure.

Optionally, the apparatus 800 further includes:
a second generation module, configured to: generate a public-private key pair based on a key generation request, use a private key in the public-private key pair as the AK, and use a public key in the public-private key pair as a public key corresponding to the AK;
a second signing module, configured to sign a TCB of the prover and the public key corresponding to the AK by using a DRK of the prover, to obtain second signature information;
a second sending module, configured to: send the TCB and the second signature information to an AS, to indicate the AS to verify the second signature information and the TCB, and when the verification succeeds, sign the public key corresponding to the AK by using a private key of the AS, to obtain the certificate of the AK; and
a second receiving module, configured to receive the certificate of the AK from the AS.

Optionally, the key generation request carries second indication information, and the second indication information indicates that the AS needs to participate in the key generation procedure.

Optionally, the second indication information further indicates that a non-anonymous key generation protocol is used in the key generation procedure.

Optionally, the first attestation report further includes the TCB of the prover and third signature information, and the third signature information is signature information obtained by the obtaining module 802 signing the TCB by using an AK.

Optionally, the first attestation report further includes a verification result that verification by the AS on the third signature information and the TCB of the prover succeeds, and includes fourth signature information.

The third signature information is signature information obtained by the obtaining module 802 signing the TCB by using the AK, the fourth signature information is signature information obtained by the AS signing the verification result by using the private key of the AS, and the verification result includes the TCB.

Optionally, a TrustZone architecture is used in the prover.

In a remote attestation procedure according to embodiments of this application, the attestation report provided by the prover for the verifier includes the first measurement information of the target TA, where the first measurement information is obtained by the prover measuring, in a procedure of running the target TA, data of the target TA during running. In other words, the first measurement information can indicate a status of the target TA during running. If the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of the remote attestation.

It may be noted that when the remote attestation apparatus provided in the foregoing embodiments performs remote attestation, only division of the foregoing functional modules is taken as an example for illustration. In actual application, the foregoing functions can be allocated to different functional modules and implemented according to a requirement, that is, an inner structure of an apparatus is divided into different functional modules to implement all or part of the functions described above. In addition, the remote attestation apparatus provided in the foregoing embodiments is based on a same concept as embodiments of the remote attestation method. For a specific implementation procedure of the remote attestation apparatus, refer to the method embodiments. Details are not described herein.

FIG. 9 is a diagram of a structure of a remote attestation apparatus 900 according to an embodiment of this application. The remote attestation apparatus 900 may be implemented as a part or all of a computer device by using software, hardware, or a combination thereof. The computer device may be the verifier in the foregoing embodiments. In embodiments of this application, the apparatus 900 is used in a verifier. Refer to FIG. 9. The apparatus includes a sending module 901, a receiving module 902, and a verification module 903.

The sending module 901 is configured to send a remote attestation request to a prover, where the remote attestation request is used to request to attest whether a target TA is securely run in a TEE of the prover, and the target TA is any TA of the verifier.

The receiving module 902 is configured to receive a first attestation report from the prover, where the first attestation report includes measurement information of the target TA, the measurement information of the target TAincludes first measurement information, and the first measurement information is obtained by the prover measuring, in a procedure of running the target TA, data of the target TA during running.

The verification module 903 is configured to verify the first attestation report, to determine whether the target TA is securely run in the TEE.

Optionally, the measurement information of the target TA further includes second measurement information. The second measurement information indicates a status of the target TA during startup, and the second measurement information is obtained by the prover from secure storage space through reading.

Optionally, the first attestation report further includes a TCB of the prover and third signature information, and the third signature information is signature information obtained by the prover signing the TCB by using an AK.

Optionally, the first attestation report further includes a verification result that verification by an AS on a TCB of the prover and third signature information succeeds, and includes fourth signature information. The third signature information is signature information obtained by the prover signing the TCB by using an AK, the fourth signature information is signature information obtained by the AS signing the verification result by using a private key of the AS, and the verification result includes the TCB.

In a remote attestation procedure according to embodiments of this application, the attestation report provided by the prover for the verifier includes the first measurement information of the target TA, where the first measurement information is obtained by the prover measuring, in a procedure of running the target TA, data of the target TA during running. In other words, the first measurement information can indicate a status of the target TA during running. If the target TA is attacked by a malicious program during running, the first measurement information may indicate that there is data related to the malicious program. In this case, after verifying the first measurement information, the verifier may attest that the target TA is not securely run. It can be learned that in this solution, the data of the target TA during running is measured in a remote attestation procedure, to reduce false attestations and improve reliability of the remote attestation.

It may be noted that when the remote attestation apparatus provided in the foregoing embodiments performs remote attestation, only division of the foregoing functional modules is taken as an example for illustration. In actual application, the foregoing functions can be allocated to different functional modules and implemented according to a requirement, that is, an inner structure of an apparatus is divided into different functional modules to implement all or part of the functions described above. In addition, the remote attestation apparatus provided in the foregoing embodiments is based on a same concept as embodiments of the remote attestation method. For a specific implementation procedure of the remote attestation apparatus, refer to the method embodiments. Details are not described herein.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state disk, SSD)), or the like. It should be noted that the computer-readable storage medium mentioned in embodiments of this application may be a non-volatile storage medium, that is, may be a non-transitory storage medium.

It should be understood that "at least one" mentioned in this specification refers to one or more, and "a plurality of" refers to two or more. In the descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the measurement information in embodiments of this application is obtained under full authorization.

The foregoing descriptions are merely embodiments of this application, but are not intended to limit this application. Any modification, equivalent replacement, or improvement made without departing from the spirit and principle of this application should fall within the protection scope of this application.

## Claims

1. A remote attestation method, wherein the method comprises:
receiving, by a prover, a remote attestation request from a verifier, wherein the remote attestation request is used to request to attest whether a target trusted application TA is securely run in a trusted execution environment TEE of the prover, and the target TA is any TA of the verifier;
obtaining, by the prover, measurement information of the target TA, wherein the measurement information of the target TA comprises first measurement information, and the first measurement information is obtained by the prover measuring, in a procedure of running the target TA, data of the target TA during running; and
sending, by the prover, a first attestation report to the verifier, wherein the first attestation report comprises the measurement information of the target TA, and the first attestation report is used by the verifier to determine whether the target TA is securely run in the TEE.

2. The method according to claim 1, wherein the measurement information of the target TA further comprises second measurement information, the second measurement information indicates a status of the target TA during startup, and the second measurement information is obtained by the prover from secure storage space through reading.

3. The method according to claim 1 or 2, wherein the prover is further configured to: run a secondary client application CA in a rich execution environment REE, and run a trusted module in the TEE;
the receiving, by a prover, a remote attestation request from a verifier comprises:
receiving, by the secondary CA, the remote attestation request; and
the obtaining, by the prover, measurement information of the target TA based on the remote attestation request comprises:
sending, by the secondary CA, the remote attestation request to the trusted module; and
obtaining, by the trusted module, the measurement information of the target TA based on the remote attestation request.

4. The method according to any one of claims 1 to 3, wherein the first attestation report further comprises first signature information and a certificate of an attestation key AK, the first signature information is signature information obtained by the prover signing the measurement information of the target TA by using the AK, and the certificate of the AK is used by the verifier to verify the first signature information.

5. The method according to claim 4, wherein the method further comprises:
generating, by the prover, a public-private key pair based on a key generation request;
using, by the prover, a private key in the public-private key pair as the AK; and
signing, by the prover, a public key in the public-private key pair by using a device root key DRK of the prover, to obtain the certificate of the AK.

6. The method according to claim 5, wherein the key generation request carries first indication information, and the first indication information indicates that an attestation server AS does not need to participate in a key generation procedure.

7. The method according to claim 4, wherein the method further comprises:
generating, by the prover, a public-private key pair based on a key generation request;
using, by the prover, a private key in the public-private key pair as the AK, and using a public key in the public-private key pair as a public key corresponding to the AK;
signing, by the prover, a trusted computing base TCB of the prover and the public key corresponding to the AK by using a DRK of the prover, to obtain second signature information;
sending, by the prover, the TCB and the second signature information to an AS, to indicate the AS to verify the second signature information and the TCB, and when the verification succeeds, signing the public key corresponding to the AK by using a private key of the AS, to obtain the certificate of the AK; and
receiving, by the prover, the certificate of the AK from the AS.

8. The method according to claim 7, wherein the key generation request carries second indication information, and the second indication information indicates that the AS needs to participate in a key generation procedure.

9. The method according to claim 8, wherein the second indication information further indicates that a non-anonymous key generation protocol is used in the key generation procedure.

10. The method according to any one of claims 1 to 9, wherein the first attestation report further comprises the TCB of the prover and third signature information, and the third signature information is signature information obtained by the prover signing the TCB by using the AK.

11. The method according to any one of claims 1 to 9, wherein the first attestation report further comprises a verification result that verification by the AS on the third signature information and the TCB of the prover succeeds, and comprises fourth signature information; and
the third signature information is signature information obtained by the prover signing the TCB by using the AK, the fourth signature information is signature information obtained by the AS signing the verification result by using the private key of the AS, and the verification result comprises the TCB.

12. The method according to any one of claims 1 to 11, wherein a TrustZone architecture is used in the prover.

13. A remote attestation method, wherein the method comprises:
sending, by a verifier, a remote attestation request to a prover, wherein the remote attestation request is used to request to attest whether a target trusted application TA is securely run in a trusted execution environment TEE of the prover, and the target TA is any TA of the verifier;
receiving, by the verifier, a first attestation report from the prover, wherein the first attestation report comprises measurement information of the target TA, the measurement information of the target TA comprises first measurement information, and the first measurement information is obtained by the prover measuring, in a procedure of running the target TA, data of the target TA during running; and
verifying, by the verifier, the first attestation report, to determine whether the target TA is securely run in the TEE.

14. The method according to claim 13, wherein the measurement information of the target TA further comprises second measurement information, the second measurement information indicates a status of the target TA during startup, and the second measurement information is obtained by the prover from secure storage space through reading.

15. The method according to claim 13 or 14, wherein the first attestation report further comprises a trusted computing base TCB of the prover and third signature information, and the third signature information is signature information obtained by the prover signing the TCB by using an attestation key AK.

16. The method according to claim 13 or 14, wherein the first attestation report further comprises a verification result that verification by an attestation server AS on a TCB of the prover and third signature information succeeds, and comprises fourth signature information, the third signature information is signature information obtained by the prover signing the TCB by using an AK, the fourth signature information is signature information obtained by the AS signing the verification result by using a private key of the AS, and the verification result comprises the TCB.

17. A remote attestation apparatus, wherein the apparatus is used in a prover, and the apparatus comprises:
a first receiving module, configured to receive a remote attestation request from a verifier, wherein the remote attestation request is used to request to attest whether a target trusted application TA is securely run in a trusted execution environment TEE of the prover, and the target TA is any TA of the verifier;
an obtaining module, configured to obtain measurement information of the target TA, wherein the measurement information of the target TA comprises first measurement information, and the first measurement information is obtained by the obtaining module measuring, in a procedure in which the prover runs the target TA, data of the target TA during running; and
a first sending module, configured to send a first attestation report to the verifier, wherein the first attestation report comprises the measurement information of the target TA, and the first attestation report is used by the verifier to determine whether the target TA is securely run in the TEE.

18. The apparatus according to claim 17, wherein the measurement information of the target TA further comprises second measurement information, the second measurement information indicates a status of the target TA during startup, and the second measurement information is obtained by the obtaining module from secure storage space through reading.

19. The apparatus according to claim 17 or 18, wherein the prover is further configured to: run a secondary client application CA in a rich execution environment REE, and run a trusted module in the TEE;
the first receiving module is configured to receive the remote attestation request by using the secondary CA; and
the obtaining module is configured to: send the remote attestation request to the trusted module by using the secondary CA, and obtain, based on the remote attestation request, the measurement information of the target TA by using the trusted module.

20. The apparatus according to any one of claims 17 to 19, wherein the first attestation report further comprises first signature information and a certificate of an attestation key AK, the first signature information is signature information obtained by the obtaining module signing the measurement information of the target TA by using the AK, and the certificate of the AK is used by the verifier to verify the first signature information.

21. The apparatus according to claim 20, wherein the apparatus further comprises:
a first generation module, configured to: generate a public-private key pair based on a key generation request, and use a private key in the public-private key pair as the AK; and
a first signing module, configured to sign a public key in the public-private key pair by using a device root key DRK of the prover, to obtain the certificate of the AK.

22. The apparatus according to claim 21, wherein the key generation request carries first indication information, and the first indication information indicates that an attestation server AS does not need to participate in a key generation procedure.

23. The apparatus according to claim 20, wherein the apparatus further comprises:
a second generation module, configured to: generate a public-private key pair based on a key generation request, use a private key in the public-private key pair as the AK, and use a public key in the public-private key pair as a public key corresponding to the AK;
a second signing module, configured to sign a trusted computing base TCB of the prover and the public key corresponding to the AK by using a DRK of the prover, to obtain second signature information;
a second sending module, configured to: send the TCB and the second signature information to an AS, to indicate the AS to verify the second signature information and the TCB, and when the verification succeeds, sign the public key corresponding to the AK by using a private key of the AS, to obtain the certificate of the AK; and
a second receiving module, configured to receive the certificate of the AK from the AS.

24. The apparatus according to claim 23, wherein the key generation request carries second indication information, and the second indication information indicates that the AS needs to participate in a key generation procedure.

25. The apparatus according to claim 24, wherein the second indication information further indicates that a non-anonymous key generation protocol is used in the key generation procedure.

26. The apparatus according to any one of claims 17 to 25, wherein the first attestation report further comprises the TCB of the prover and third signature information, and the third signature information is signature information obtained by the obtaining module signing the TCB by using the AK.

27. The apparatus according to any one of claims 17 to 25, wherein the first attestation report further comprises a verification result that verification by the AS on the third signature information and the TCB of the prover succeeds, and comprises fourth signature information; and
the third signature information is signature information obtained by the obtaining module signing the TCB by using the AK, the fourth signature information is signature information obtained by the AS signing the verification result by using the private key of the AS, and the verification result comprises the TCB.

28. The apparatus according to any one of claims 17 to 27, wherein a TrustZone architecture is used in the prover.

29. A remote attestation apparatus, wherein the apparatus is used in a verifier, and the apparatus comprises:
a sending module, configured to send a remote attestation request to a prover, wherein the remote attestation request is used to request to attest whether a target trusted application TA is securely run in a trusted execution environment TEE of the prover, and the target TA is any TA of the verifier;
a receiving module, configured to receive a first attestation report from the prover, wherein the first attestation report comprises measurement information of the target TA, the measurement information of the target TA comprises first measurement information, and the first measurement information is obtained by the prover measuring, in a procedure of running the target TA, data of the target TA during running; and
a verification module, configured to verify the first attestation report, to determine whether the target TA is securely run in the TEE.

30. The apparatus according to claim 29, wherein the measurement information of the target TA further comprises second measurement information, the second measurement information indicates a status of the target TA during startup, and the second measurement information is obtained by the prover from secure storage space through reading.

31. The apparatus according to claim 29 or 30, wherein the first attestation report further comprises a trusted computing base TCB of the prover and third signature information, and the third signature information is signature information obtained by the prover signing the TCB by using an attestation key AK.

32. The apparatus according to claim 29 or 30, wherein the first attestation report further comprises a verification result that verification by an attestation server AS on a TCB of the prover and third signature information succeeds, and comprises fourth signature information, the third signature information is signature information obtained by the prover signing the TCB by using an AK, the fourth signature information is signature information obtained by the AS signing the verification result by using a private key of the AS, and the verification result comprises the TCB.

33. A remote attestation system, wherein the system comprises a verifier and a prover, the prover is configured to implement steps of the method according to any one of claims 1 to 12, and the verifier is configured to implement steps of the method according to any one of claims 13 to 16.

34. A computer-readable storage medium, wherein the storage medium stores a computer program, and when the computer program is executed by a processor, steps of the method according to any one of claims 1 to 12 are implemented, or steps of the method according to any one of claims 13 to 16 are implemented.

35. A computer program product, wherein the computer program product stores computer instructions, and when the computer instructions are executed by a processor, steps of the method according to any one of claims 1 to 12 are implemented, or steps of the method according to any one of claims 13 to 16 are implemented.
